# EUROPEAN PATENT APPLICATION

(11) **EP 3 950 513 A1**
(43) Date of publication of application: **09.02.2022**
(21) Application number: 20189479.7
(22) Date of filing: 04.08.2020
(51) Int. Cl.: B64G 1/66, B64G 1/40, B64G 1/10

(54) **SPACECRAFT, ARTIFICIAL SHOOTING STAR GENERATION METHOD, AND SERVICE PROVISION METHOD**

(71) Applicant: Ale Co., Ltd., Tokyo 105-0012 (JP)
(72) Inventor: KAMACHI, Koh, Minato-ku, Tokyo 105-0012 (JP); KUWAHARA, Toshinori, Sendai-shi, Miyagi 980-8577 (JP)
(74) Representative: Osha Liang

(57) **Abstract**

[Object] To safely generate a shooting star in various aspects at a planned position on a planned date.

[Solution] A spacecraft includes (101): an ejector (103) that ejects an object (102) being a base of a shooting star at a speed of 120 m/s or more; a direction controller (106, 107) that controls a direction in which the object is ejected; and a position controller that controls a position at which the object is ejected. The ejector sequentially ejects objects at a predetermined time interval. The ejector controls a time interval individually for each of the objects. The spacecraft includes an autonomous controller (109) that autonomously controls the ejector, direction controller, and position controller, to eject the object in a predetermined ejecting direction and at predetermined ejecting position and speed. The autonomous controller controls ejection of the object based on a result of determination on measurement data individually performed by each of arithmetic units

## Description

### BACKGROUND

### Technical Field

The present disclosure relates to a spacecraft, an artificial shooting star generation method, and a service provision method.

### Related Art

Japanese Patent Application Publication No. 2007-118916 (Patent Document 1) describes a spacecraft that artificially generates a shooting star phenomenon. The spacecraft includes a launching mechanism (such as a gas gun or a railgun) for launching a projectile, a housing unit for housing the projectile, a loading mechanism for loading the projectile from the housing unit into the launching mechanism, a control mechanism for controlling the attitude of the spacecraft, and an orienting mechanism for changing the launching direction of the launching mechanism.

The number of private companies entering the space business has been increasing in recent years. Among them, there are not only remote sensing business and communication business having relatively many entrants, but also new space utilization methods such as space hotels and space travel. The present inventors have been working on space entertainment business. Specifically, an object is ejected from an artificial satellite, plunged into the Earth's atmosphere, and gasified/burned at an altitude of about 60 km, to artificially generate a light emitting phenomenon similar to that of a shooting star. This light emitting phenomenon is called an artificial shooting star. The space entertainment business provides an experience of observing such artificial shooting stars from the ground as entertainment.

However, when the object is ejected in outer space, safety is an issue, for example, there may be a case where the object does not enter the Earth's atmosphere due to some trouble, resulting in space debris, or there is a possibility of collision with another spacecraft. It is also another significant issue to cause an object to emit light at a position visible from a planned site.

Meanwhile, the idea of artificially creating a shooting star has been around since about 1940, and in the 1960s, NASA's Langley Research Center conducted an artificial shooting star experiment using a sounding rocket and a kick motor, in which an artificial shooting star was generated by accelerating a metal projectile of about 1 to 2 cm to 11 to 12 km/s in ballistic and multi-stage flight, and plunging it into the Earth's atmosphere. However, the method using such a rocket results in a single event, and it is difficult to give variations to the light emission pattern. In addition, the place of occurrence is limited, and commercial use is not practical.

The above-described Patent Document 1 describes a spacecraft for generating an artificial shooting star. The spacecraft includes plural objects, a mechanism for housing, loading, or launching the objects, and a mechanism for controlling the attitude of the spacecraft and the ejecting direction of the objects.

However, with the technique described in Patent Document 1, it is difficult to reliably observe the light emission of the artificial shooting star from the planned site, and moreover, there is a possibility of generating space debris. As a reason therefor, first, it is difficult to reliably determine the trajectory of the projectile only by controlling the attitude of the spacecraft. The spacecraft is traveling at an extremely high speed of about 7.5 km/s, and its trajectory shifts by 7.5 km if the ejecting position shifts by 1 second, for example. The error in ejecting direction and the error in ejecting speed further are added to the error in initial condition, resulting in the error in final arrival position. Thus, the deviation of the ejecting position may make it difficult to conduct reliable observation from the planned position on the ground. In addition, the deviation from the planned ejection trajectory may cause a collision with another spacecraft, and the collision may result in producing space debris. In space, there could be unpredictable equipment troubles caused by radiation and/or the like, so that the attitude of the spacecraft may not be reliably controlled as planned. In that case, the object may be ejected into a trajectory that will not enter the atmosphere, which may result in space debris.

In addition, when providing artificial shooting stars to customers as space entertainment, conventional methods can produce only a single light emission or a simple light emission pattern in the form of several straight lines arranged. For example, in Patent Document 1, an object of 10 g is ejected by a smokeless explosive in the direction opposite to the velocity vector of the spacecraft, but there is no description of ejecting plural objects. Moreover, even when plural objects are ejected from the spacecraft, the foregoing method can only achieve light emissions arranged on the same straight line as the spacecraft trajectory. Assuming that the time required from loading to ejecting an object is 10 seconds, the visibility time of a high-speed flying object traveling at 7.5 km/s at an altitude of 60 km, which is an altitude at which an artificial shooting star emits light, is about 60 seconds, and the maximum number of light emissions that can be seen from the same site is about 6.

As described above, there are issues in implementing the service of an artificial shooting star, for example, it is unfailingly needed to plunge the object into the Earth's atmosphere as a base of the artificial shooting star, prevent the collision of the object with another spacecraft, cause the object to emit light such that it can be reliably seen from the planned site, and give the service a variety (added value) of light emitting patterns.

The present disclosure has been achieved based on the above background, and an object thereof is to provide a spacecraft, a shooting star generation method, and a service provision method, which make it possible to safely generate a shooting star in various aspects at a planned position on a planned date.

### SUMMARY

One aspect of the present disclosure to achieve an object as described above is a spacecraft comprising: an ejector that ejects at least one object at a speed of 120 m/s or more, the at least one object being a base of a shooting star; a direction controller that controls a direction in which the object is ejected; and a position controller that controls a position at which the object is ejected.

In addition, issues disclosed in the present application and the solutions therefor will be made clear from embodiments for carrying out the disclosure and drawings.

The present disclosure makes it possible to safely generate a shooting star in various aspects at a planned position on a planned date.

### BRIEF DESCRIPTION OF THE DRAWINGS

Fig. 1 is a diagram illustrating a main configuration of a spacecraft;
Fig. 2 is an example of an ejector;
Fig. 3A is another example of an ejector;
Fig. 3B is another example of an ejector;
Fig. 3C is another example of an ejector;
Fig. 4A is a diagram schematically illustrating trajectories of a spacecraft and an object when the object is ejected from the spacecraft at 120 m/s;
Fig. 4B is a diagram schematically illustrating trajectories of a spacecraft and an object when the object is ejected from the spacecraft at 119 m/s;
Fig. 5 is a diagram illustrating a range in which an artificial shooting star can be seen from a planned site on the ground;
Fig. 6 is a graph illustrating a relationship between an error in speed of an object and an error in light-emitting position of the object;
Fig. 7A is a diagram explaining a principle by which an electronic controller determines whether a direction in which an object is ejected is in a target direction based on measurement data inputted from each of plural direction measuring instruments;
Fig. 7B is a diagram explaining a principle by which an electronic controller determines whether a current position of a spacecraft coincides with a target position for ejecting an object based on measurement data inputted from each of plural position measuring instruments;
Fig. 7C is a diagram explaining a principle by which plural trigger mechanisms of an ejector are controlled based on operation instructions of plural arithmetic units of an electronic controller;
Fig. 8 is an example of a configuration relating to ejection control of an object;
Fig. 9 is a diagram illustrating a mechanism for preventing an object from colliding with another spacecraft;
Fig. 10A is a celestial map illustrating a pattern drawn by artificial shooting stars seen from the ground when plural objects are sequentially ejected from a spacecraft at the same speed;
Fig. 10B is a celestial map illustrating a pattern drawn by artificial shooting stars seen from the ground when plural objects are sequentially ejected from a spacecraft with the speeds of ejecting plural objects being varied;
Fig. 10C is a celestial map illustrating a pattern drawn by artificial shooting stars seen from the ground when plural objects are sequentially ejected from a spacecraft with ejecting positions being varied; and
Fig. 11 is an example of a container.

### DETAILED DESCRIPTION

Hereinafter, embodiments are described with reference to the drawings. Note that, in the following description, the same or similar configurations are denoted by the same reference numerals, and redundant descriptions may be omitted.

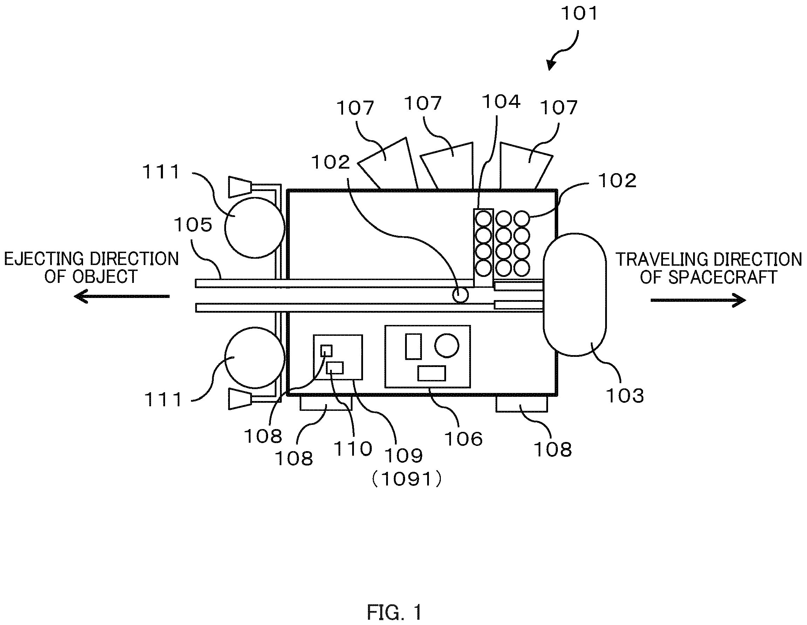

Fig. 1 is a diagram illustrating a main configuration of a spacecraft 101 that generates an artificially-created shooting star (hereinafter referred to as an "artificial shooting star"), which is illustrated as an embodiment of the present disclosure. Although the case where the spacecraft 101 is an artificial satellite will be described below as an example, the type of the spacecraft 101 is not limited thereto and may be, for example, a spaceship, a space station or the like.

The spacecraft 101 includes plural objects 102 as bases of artificial shooting stars, an ejector (an accelerating mechanism 103, a loading mechanism 104, and a barrel 105) for the objects 102, a direction controller (an actuator 106 and direction measuring instrument 107) that controls the ejecting directions of the objects 102, a position controller (position measuring instrument 108 and an ejection indicator 110) that controls the ejecting positions (timing of ejection) of the objects 102, and a trajectory controller (a propulsion device 111) .

Each object 102 is made of a substance having the property of emitting light upon collision with molecules in the upper atmospheric layers, for example, a substance containing a metal. As illustrated in Fig. 1, assuming that the side of the spacecraft 101 in the traveling direction is defined as the front side, the object 102 is ejected from the rear side of the spacecraft 101.

The ejector accelerates the object 102 and ejects them into space. The accelerating mechanism 103, which is a constituent element of the ejector, accelerates the object 102 to a predetermined speed, for example, 150 to 400 m/s, by using, for example, explosives, high-pressure gas, or an electromagnetic accelerator. The loading mechanism 104, which is a constituent element of the ejector, automatically loads the object 102 into the loading position of the barrel 105.

The direction controller controls the ejecting direction of the object 102 by controlling the attitude of the spacecraft 101 while measuring the orientation direction (attitude) of the spacecraft 101. The direction measuring instrument 107, which is a constituent element of the direction controller, is, for example, a fixed star sensor, a Sun sensor, a geomagnetic field sensor, or an Earth sensor. The actuator 106, which is a constituent element of the direction controller, is, for example, a reaction wheel, a momentum gyro, a magnetic torquer, or a thruster. The spacecraft 101 may include plural types of sensors as the direction measuring instrument 107. In that case, even if some of the sensors fail, it is possible to maintain the function of measuring the orientation direction (attitude) of the spacecraft 101.

The position controller controls the position at which the object 102 (timing of ejecting the object 102) is ejected while measuring the current position of the spacecraft 101. Examples of the position measuring instrument 108, which is a constituent element of the position controller, include an internal clock (timer) included in the electronic controller 109, and a global positioning system (GPS) receiver. The function of the ejection indicator 110, which is a constituent element of the position control unit, is implemented by, for example, the arithmetic unit 1091 included in the electronic controller 109.

The electronic controller 109 functions as an autonomous controller that controls the ejector, the direction controller, and the position controller, and automatically ejects the object 102 from a predetermined position at a predetermined ejecting speed in a predetermined direction.

The electronic controller 109 is configured with an information processor (computer) including plural arithmetic units 1091. Each of the arithmetic units 1091 includes a processor and a storage device. Examples of the processor include a central processing unit (CPU), a micro processing unit (MPU), an artificial intelligence (AI) chip, a field programmable gate array (FPGA), and an application specific integrated circuit (ASIC). Examples of the storage device include a read only memory (ROM), a random access memory (RAM), and a non-volatile memory (Non-Volatile RAM (NVRAM)).

The trajectory controller controls the trajectory of the spacecraft 101, maintains the trajectory of the spacecraft 101, changes the trajectory of the spacecraft 101, and/or the like. The type of the propulsion device 111, which is a constituent element of the trajectory controller, is not necessarily limited, but is, for example, a cold gas thruster.

Note that the spacecraft 101 orbiting the Earth slightly receives a resistance of the rarefied atmosphere, so that its orbiting speed decreases and the altitude is gradually lowered. Accordingly, the trajectory controller controls the speed of the spacecraft 101 as needed to maintain the trajectory semi-major axis of the spacecraft 101. Accordingly, the artificial shooting star can be generated at the planned position on the planned date.

### <Ejector>

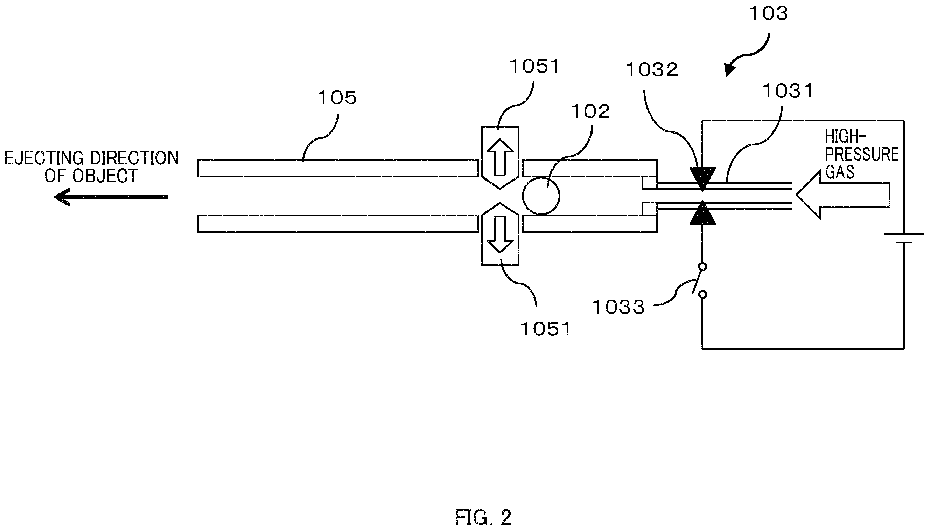

Fig. 2 illustrates an example of the ejector. The illustrated ejector includes an accelerating mechanism 103 that accelerates the object 102 using high-pressure gas. The illustrated acceleration mechanism 103 includes a gas introducing pipe 1031 that guides high-pressure gas to the barrel 105, and a solenoid valve 1032 that opens and closes the gas introducing pipe 1031. The solenoid valve 1032 is controlled to open and close by an electric switch 1033. A stopper 1051 that blocks the traveling of the object 102 is provided at a predetermined position in the longitudinal direction of the barrel 105. Specifically, the illustrated ejector includes plural trigger mechanisms (the solenoid valve 1032 and the stopper 1051), and has a structure in which the object 102 is ejected from the barrel 105 only when the solenoid valve 1032 and the stopper 1051 are simultaneously opened.

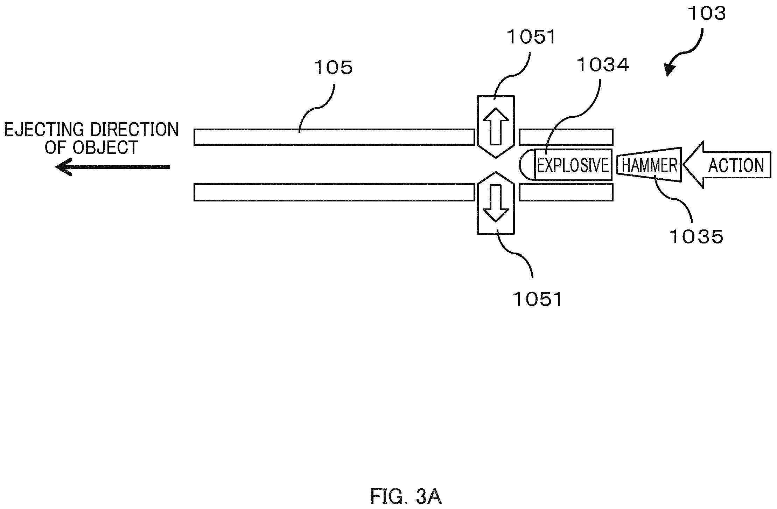

Figs. 3A to 3C illustrate different examples of the ejector. In the ejector illustrated in Fig. 3A, the accelerating mechanism 103 is configured using an explosive 1034 and a hammer 1035. As with the ejector of Fig. 2, the barrel 105 is provided with the stopper 1051. Specifically, the illustrated ejector includes plural trigger mechanisms (the hammer 1035 and the stopper 1051), and has a structure in which the object 102 is ejected from the barrel 105 only when the stopper 1051 is opened during the operation of the hammer 1035.

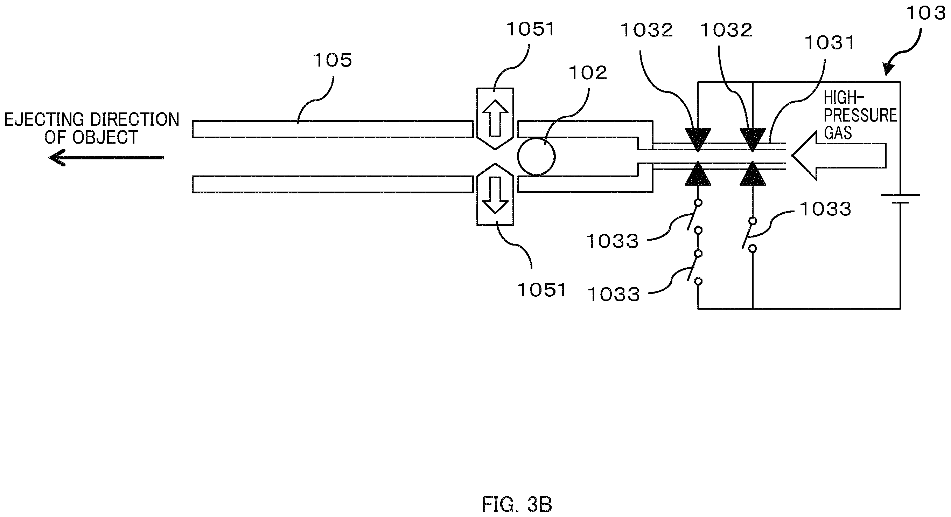

As with the ejector of Fig. 2, the accelerating mechanism 103 uses high-pressure gas in the ejector illustrated in Fig. 3B, but the gas introducing pipe 1031 is provided with two solenoid valves 1032 along the longitudinal direction of the pipe. Out of the two solenoid valves 1032, the solenoid valve 1032 provided closer to the barrel 105 is controlled to open and close by two switches 1033 coupled in series, and the other solenoid valve 1032 is controlled to open and close by one switch 1033 coupled in series therewith. Specifically, the illustrated ejector includes plural trigger mechanisms (the three switches 1033 and the stopper 1051), and has a structure in which the object 102 is ejected from the barrel 105 only when the two solenoid valves 1032 are simultaneously opened by the three switches 1033 and further the stopper 1051 is also simultaneously opened.

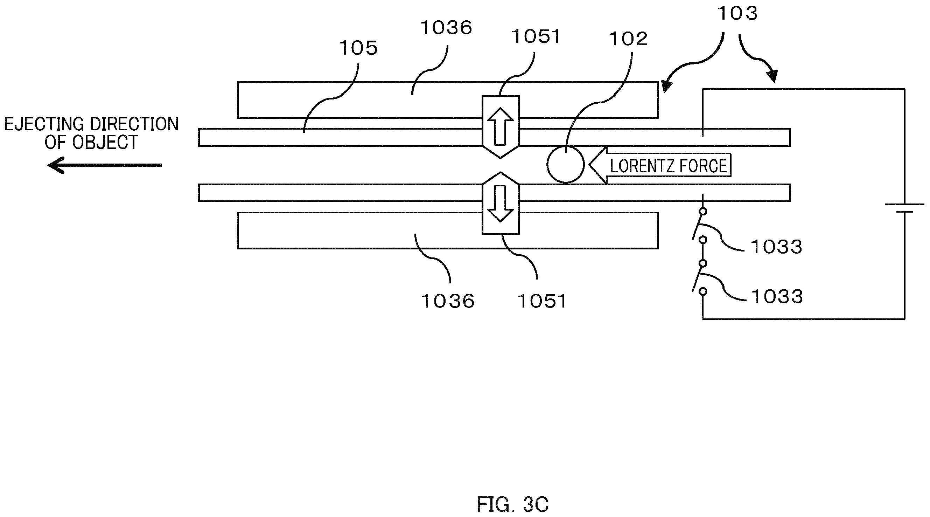

In the ejector illustrated in Fig. 3C, the accelerating mechanism 103 is configured using the electromagnetic accelerator 1036. Note that the present example assumes that the object 102 is a conductor (metal) that can be accelerated by the electromagnetic accelerator 1036 (by Lorentz force). The accelerating action of the electromagnetic accelerator 1036 is turned on and off by the two switches 1033 coupled in series. As with the ejector of Fig. 2, the barrel 105 is provided with stopper 1051. Specifically, the illustrated ejector includes plural trigger mechanisms (the two switches 1033 and the stopper 1051), and has a structure in which the object 102 is ejected from the barrel 105 only when the two switches 1033 are simultaneously turned on and further the stopper 1051 is also simultaneously opened.

As described above, the ejector of the spacecraft 101 according to the present embodiment includes plural trigger mechanisms. Accordingly, it is possible to prevent the erroneous ejection of the object 102 which might be caused by a single failure of one of the trigger mechanisms, thereby being able to ensure safety.

### <Lower Limit of Ejecting Speed>

In order to ensure that the object 102 ejected from the ejector enters the atmosphere of the Earth, the ejector needs to eject the object 102 from the spacecraft 101 at a speed of 120 m/s or more. The reason will be described below.

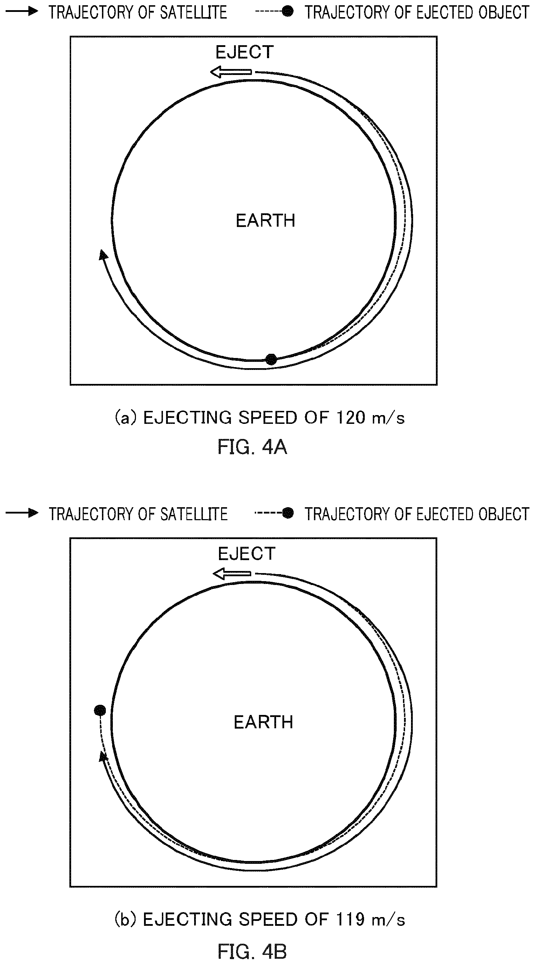

Figs. 4A and 4B each schematically illustrate the trajectories of the spacecraft 101 and the object 102 when the object 102 is ejected from the spacecraft 101 on a circular trajectory at an altitude of 400 km in a direction opposite to the traveling direction of the spacecraft 101. Fig. 4A is a diagram illustrating the trajectories of the spacecraft 101 and the object 102 when the object is ejected from the spacecraft 101 rearward with respect to the traveling direction (forward) of the spacecraft 101 at a speed of 120 m/s, and Fig. 4B is a diagram illustrating the trajectories of the spacecraft 101 and the object 102 when the object 102 is ejected rearward with respect to the traveling direction (forward) of the spacecraft 101 at a speed of 119 m/s.

When the object 102 is ejected rearward with respect to the traveling direction of the spacecraft 101, the speed of the object 102 is relatively slower than the speed of the spacecraft 101, and the altitude of the object 102 gradually decreases due to the attractive force of the Earth. Here, as illustrated in Fig. 4A, when the object 102 is ejected at a speed of 120 m/s, the object 102 reaches an altitude of 0 km at a position substantially opposite to the ejecting position with respect to the Earth E. On the other hand, as illustrated in Fig. 4B, when the ejecting speed is set to 119 m/s, the speed of the object 102 does not sufficiently decrease, and the object 102 may continue to travel in an elliptical trajectory and result in space debris. From the above, in order to prevent the object 102 from resulting in space debris, the object 102 needs to be ejected rearward with respect to the traveling direction (forward) of the spacecraft 101 at a speed of 120 m/s or more.

Meanwhile, in order to ensure that the artificial shooting star can be seen from a planned site on the ground, the object 102 needs to be rejected from the spacecraft 101 at a speed of 150 m/s or more. The reason will be described below.

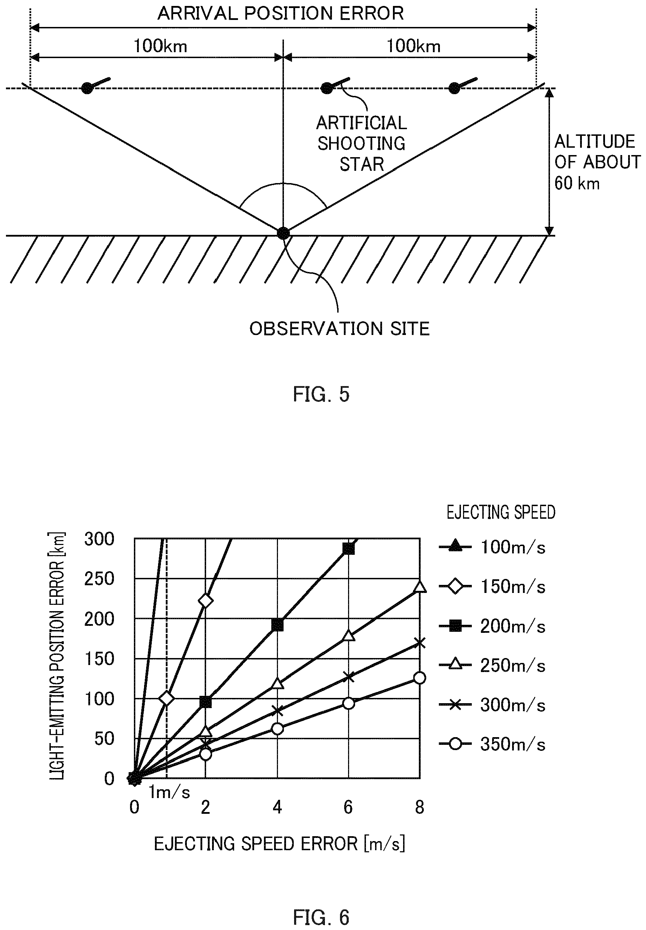

As illustrated in Fig. 5, in order to ensure that the artificial shooting star can be seen from a planned site on the ground, light needs to be emitted within a radius of 100 km from the site (within a range of a viewing angle of 120° when the zenith is viewed from that site).

Fig. 6 illustrates an error in light-emitting position ("Light-Emitting Position Error" in Fig. 6) with respect to an error in speed of the object 102 ("Ejecting Speed Error" in Fig. 6) for each speed at which the object 102 is ejected (hereinafter referred to as the "ejecting speed"). As illustrated in Fig. 6, when the ejecting speed of the object 102 is less than 150 m/s and assuming that the error in ejecting speed is less than 1 m/s, the error in light-emitting position is about 100 km. However, it is technically difficult to reduce the error in ejecting speed to less than 1 m/s. Accordingly, the ejecting speed of the object 102 needs to be 150 m/s or more.

### <Ejection Control of Object>

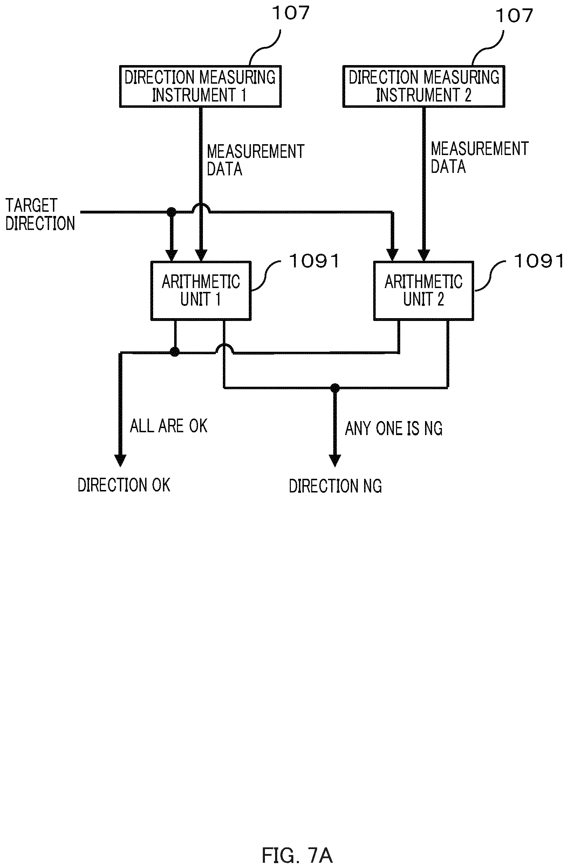

Subsequently, a mechanism by which the electronic controller 109 controls the ejection of the object 102 will be described with reference to Figs. 7A to 7C.

Fig. 7A is a diagram explaining a principle on which the electronic controller 109 determines whether the direction in which the object 102 is ejected (direction of the barrel 105) is in a target direction (hereinafter referred to as the "target direction"), based on the measurement data inputted from each of the plural direction measuring instruments 107. As illustrated in Fig. 7A, the measurement data of the direction measuring instruments 107 different from each other are inputted to the plural (two in the present example) arithmetic units 1091, respectively. Additionally, the same target direction to be compared with the inputted measurement data is inputted to each of the plural arithmetic units 1091. Each of the plural arithmetic units 1091 determines whether the inputted measurement data coincides with the target direction, and outputs the determination result. When all of the plural arithmetic units 1091 determine that the measurement data coincide with the target direction, the electronic controller 109 determines that the direction of the barrel 105 is in the target direction. Whereas, when even any one of the plural arithmetic units 1091 determines that the measurement data does not coincide with the target direction, the electronic controller 109 determines that the direction of the barrel 105 is not in the target direction.

Accordingly, the plural arithmetic units 1091 individually determine, for each piece of measurement data, whether the measurement data from each of the direction measuring instruments 107 coincides with the target direction, thereby being able to reliably prevent erroneous ejection of the object 102 even if any one of the arithmetic units 1091 malfunctions due to the influence of radiation and/or the like.

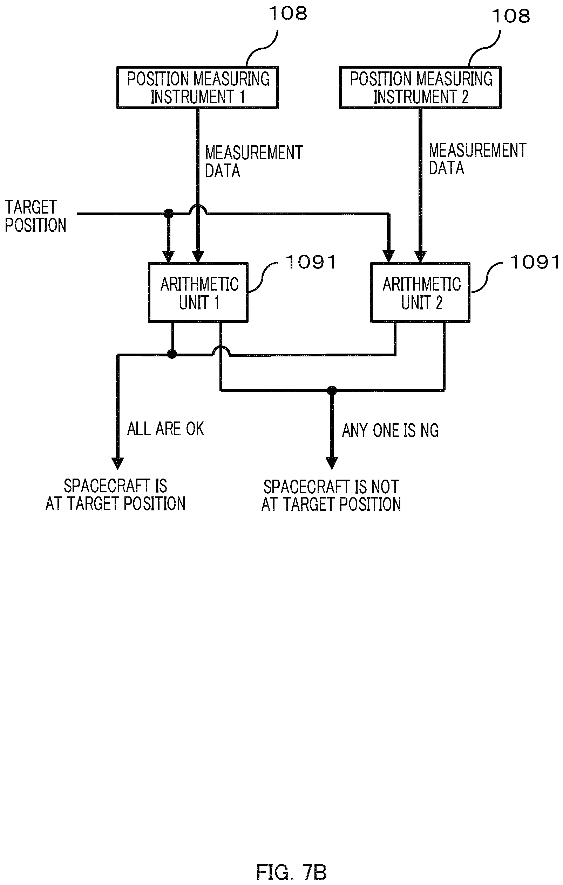

Fig. 7B is a diagram explaining a principle on which the electronic controller 109 determines whether the current position of the spacecraft 101 coincides with the position at which the object 102 is to be ejected (hereinafter referred to as the "target position") (whether the current time is the timing at which the object 102 is to be ejected) based on the measurement data inputted from each of the plural position measuring instruments 108. As illustrated in Fig. 7B, the measurement data of the position measuring instruments 108 different from each other is inputted to the plural (two in the present example) arithmetic units 1091, respectively. Additionally, the same target position to be compared with the inputted measurement data is inputted to each of the plural arithmetic units 1091. Each of the plural arithmetic units 1091 compares the inputted measurement data with the target position, determines whether the measurement data coincides with the target position, and outputs the determination result. When all of the plural arithmetic units 1091 determine that the measurement data coincide with the target position, the electronic controller 109 determines that the current position of the spacecraft 101 coincides with the target position at which the object 102 is to be ejected. Whereas, when even any one of the plural arithmetic units 1091 determines that the measurement data does not coincide with the target position, the electronic controller 109 determines that the current position of the spacecraft 101 does not coincide with the target position at which the object 102 is to be ejected.

Accordingly, the plural arithmetic units 1091 individually determine, for each piece of measurement data, whether the measurement data from the position measuring instruments 108 coincide with the target position, thereby being able to reliably prevent erroneous ejection of the object 102 even if any one of the arithmetic units 1091 malfunctions due to the influence of radiation and/or the like.

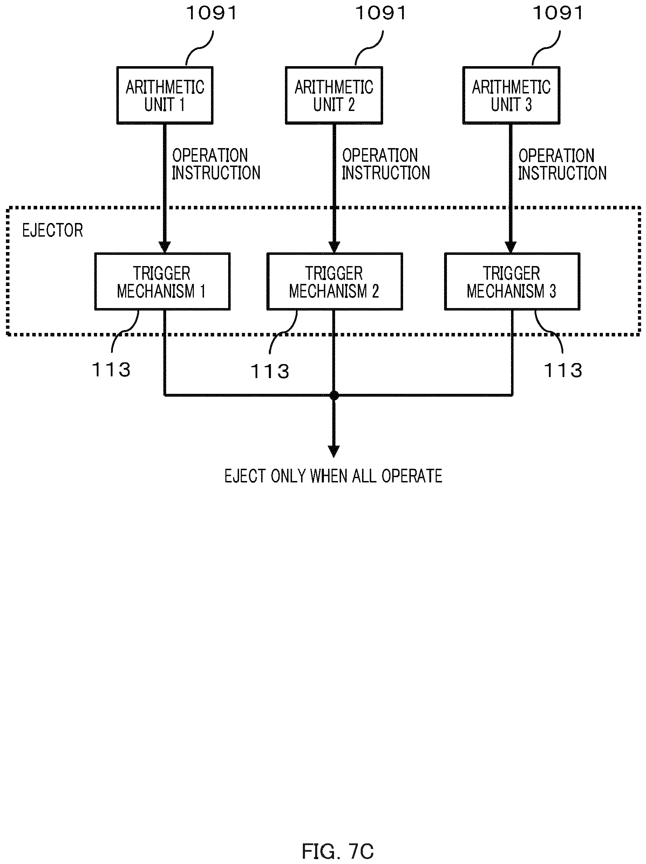

Fig. 7C is a diagram explaining a principle of on which the plural trigger mechanisms 113 of the ejector are controlled based on the operation instructions of the plural (three in the present example) arithmetic units 1091 of the electronic controller 109. As illustrated in Fig. 7C, the plural trigger mechanisms 113 are controlled by arithmetic units 1091, different from each other, respectively, and all of the plural trigger mechanisms 113 operate to eject the object 102 only when all of the arithmetic units 1091 input the operation instructions to the trigger mechanisms 113. Specifically, if even any one of the three arithmetic units 1091 is abnormal, the object 102 is not ejected, thereby being able to reliably prevent the erroneous ejection of the object 102 when the arithmetic unit 1091 malfunctions due to the influence of radiation and/or the like.

As described above, the spacecraft 101 has a mechanism for preventing the erroneous ejection of the object 102, thereby being able to ensure safety.

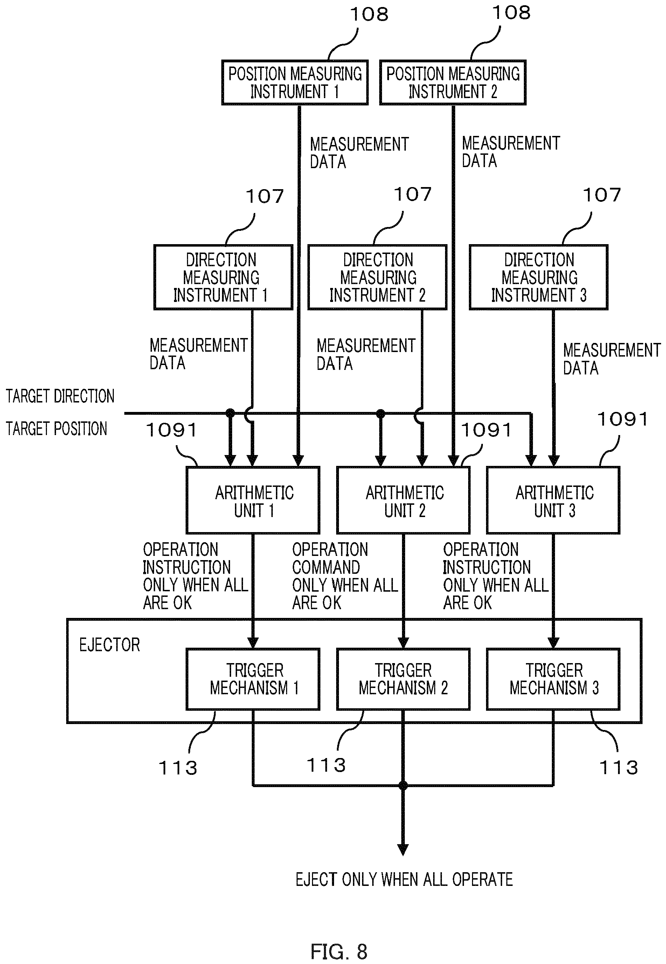

Fig. 8 is a block diagram of a control mechanism for controlling the ejection of the object 102 configured based on the above principles. As illustrated in Fig. 8, the electronic controller 109 has three arithmetic units 1091 respectively corresponding to the three trigger mechanisms 113. The measurement data from the three different direction measuring instruments 107 are inputted to the three arithmetic units 1091, respectively. Additionally, the measurement data from the two different position measuring instruments 108 are inputted to two of the arithmetic units 1091.

Each of the three arithmetic units 1091 compares the inputted measurement data of the direction measuring instrument 107 with the target direction. In addition, each of the two arithmetic units 1091 compares the inputted measurement data of the position measuring instrument 108 with the target position. When the measurement data of the direction measuring instrument 107 coincides with the target direction and the measurement data of the position measuring instrument 108 coincides with the target position (however, with respect to the arithmetic unit 1091 to which only the measurement data of the direction measuring instrument 107 is inputted, when the measurement data of the direction measuring instrument 107 coincides with the target direction), the arithmetic units 1091 output operation instructions to the trigger mechanisms 113, respectively. Then, all of the plural trigger mechanisms 113 operate to eject the object 102 only when all of the arithmetic units 1091 input the operation instructions to the trigger mechanisms 113, respectively.

### <Prevention of Collision with Another Spacecraft>

When the object 102 is ejected from the spacecraft 101, the object 102 needs to be prevented from colliding with another spacecraft. The mechanism therefor will be described below.

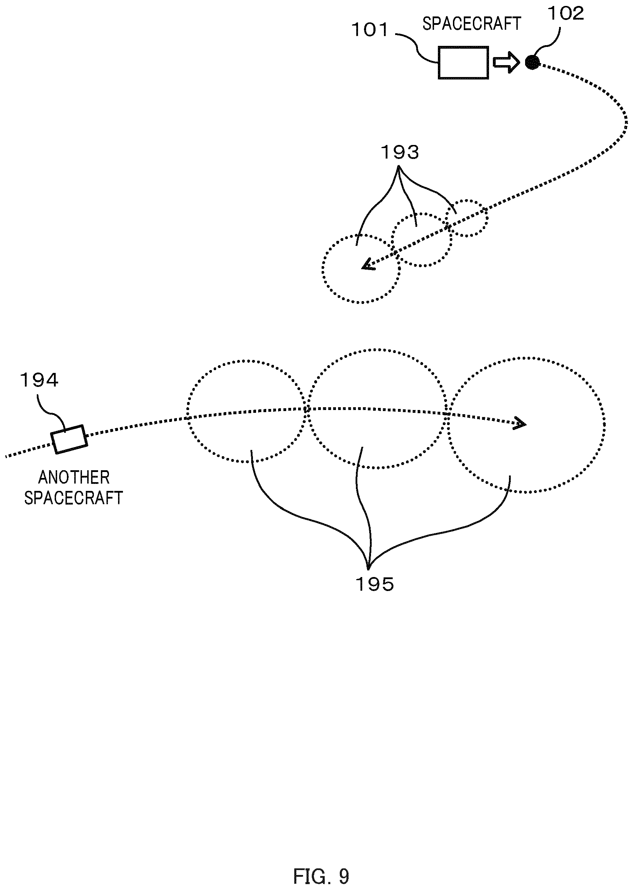

Fig. 9 is a diagram for explaining the foregoing mechanism. The speed, ejecting direction, and ejecting position of the object 102 when ejected from the spacecraft 101 each include an error, and the result of trajectory calculation for the ejected object 102 using the electronic controller 109 also includes an error. Accordingly, a range in which the object 102 is expected to reach results in an elliptical range representing the range of error variance illustrated in Fig. 9 (hereinafter referred to as the "predicted object existence range 193").

On the other hand, for the other spacecraft 194, the existence range can be predicted by using, for example, a two-line elements (TLE), which is internationally published information on trajectories of flying objects. However, this trajectory information also includes errors caused by perturbations which are difficult to measure and predict on trajectories, and the range in which the other spacecraft 194 is expected reach results in an elliptical range representing the range of error variance illustrated in Fig. 9 (hereinafter referred to as the "predicted flying object existence range 195").

The collision probability between the object 102 and the other spacecraft 194 can be calculated based on the relationship between the foregoing predicted object existence range 193 and predicted flying object existence range 195. Then, the object 102 is ejected when the obtained collision probability is sufficiently small (if it is equal to or less than a preset threshold value), thereby being able to prevent the collision between the spacecraft 101 and the other spacecraft 194.

Note that, according to the international guidelines, the foregoing collision probability necessary for ensuring safety is 4.5E-9 or less if the other spacecraft 194 is an unmanned flying object, and is 2.5E-9 or less if the other spacecraft 194 is a manned flying object.

### <Procedure of Ejecting Object>

The object 102 is ejected from the spacecraft 101 according to the following procedure, for example.
(1) Lower the altitude of the spacecraft 101 to 400 km or less.
(2) Use the TLE trajectory information to obtain the collision probability between the ejected object 102 and the other spacecraft 194.
(3) If it can be confirmed that the collision probability is sufficiently small, transmit a radio signal instructing the ejection of the object 102 from a ground station to the spacecraft 101.
(4) When the spacecraft 101 receives the radio signal and reaches the planned ejecting position, eject the object 102 in the planned ejecting direction at the planned ejecting speed.
(5) Observe the artificial shooting star from the ground. Note that, by measuring the position of one of the artificial shooting stars to identify the trajectory of the object 102 and compare it with the planned trajectory of the object 102, it is possible to predict the density distribution of the upper atmospheres, calibrate the air resistance, predict the aerodynamic heating rate, and the like.

### <Provision of Services>

Various services related to the artificial shooting stars can be provided by using the spacecraft 101 described above. Note that such services are expected not only to be profitable as entertainment, but also to contribute to the development of science and technology, such as technology for observing the upper atmospheres and predicting phenomena when the object enters the Earth's atmosphere.

In providing the foregoing services, for example, by obtaining the trajectories of the spacecraft 101 and the object 102 using the information processor, a notification of information needed for observation, such as the planned occurrence date and time and a region where the artificial shooting star is observable, may be individually provided through communication means such as the Internet to the communication terminals of service beneficiaries (such as customers, stakeholders, researchers, and the like).

Further, for example, the artificial shooting star may be observed from a ship underway or an airplane in flight. If the artificial shooting star is generated over the sea or in the sky in conjunction with a cruising tour or a flight tour, it is possible to provide a service to specific people. Additionally, the use of a ship and/or an aircraft reduces the influence of the weather and city lights, thereby being able to provide stable services.

If the spacecraft 101 is introduced into a Sun-synchronous orbit, the local time zone of the region where the spacecraft 101 is passed can be fixed, and for example, the shooting star can be generated in regions around the world in the evening time zone in which the shooting star is most easily observable. For example, if the Sun-synchronous orbit where local time of descending node (LTDN) is 20:00 is selected, the artificial shooting star can be generated in the time zone from 19:00 to 21:00 local time in all regions on the Earth.

Moreover, for example, the trajectory semi-major axis of the spacecraft 101 is controlled using the trajectory controller, such that the trajectory is adjusted to have a constant number of return days, the trajectory semi-major axis is voluntarily changed according to the contents of the service orders, or the like. This makes it possible to generate the artificial shooting star on the expected date in the expected place.

Additionally, examples of the spacecraft 101 include a low-orbit satellite orbiting the Earth ten times or more a day. This makes it possible to provide services using the artificial shooting star in various regions over the world.

### <Aspects of Generating of Artificial Shooting Star>

In addition, by controlling the ejecting speed, ejecting direction, and ejecting position of the object 102, it is possible to generate artificial shooting stars in various aspects, thereby being able to enhance the service contents. The details will be described below.

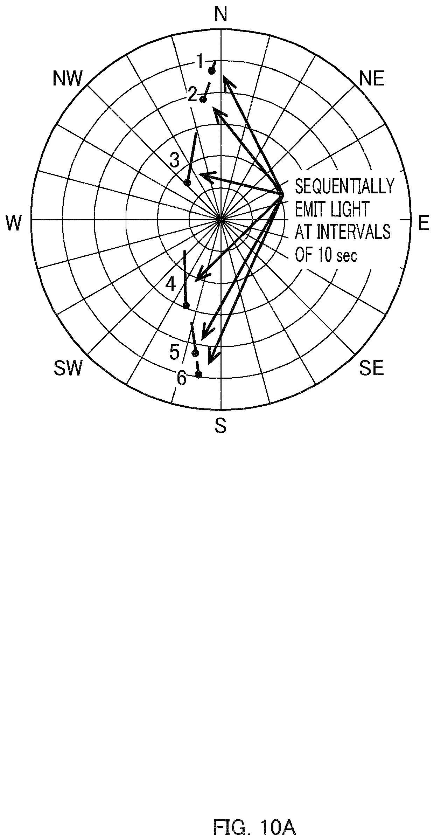

Fig. 10A is a celestial map illustrating a pattern drawn by artificial shooting stars seen from the ground when the plural objects 102 are sequentially ejected from the spacecraft 101. Note that the visibility time of a high-speed flying object traveling at a speed of 7.5 km/s at an altitude of about 60 km where the shooting stars emit light is about 60 seconds. Accordingly, assuming, for example, that the minimum time needs to sequentially eject the objects 102 from the spacecraft 101 is 10 seconds and the ejecting speed is constant, the number of light emissions visible from one site is 60/10=6. Note that, by varying the time intervals at which the objects 102 are sequentially ejected, it is possible to generate the artificial shooting stars in various aspects.

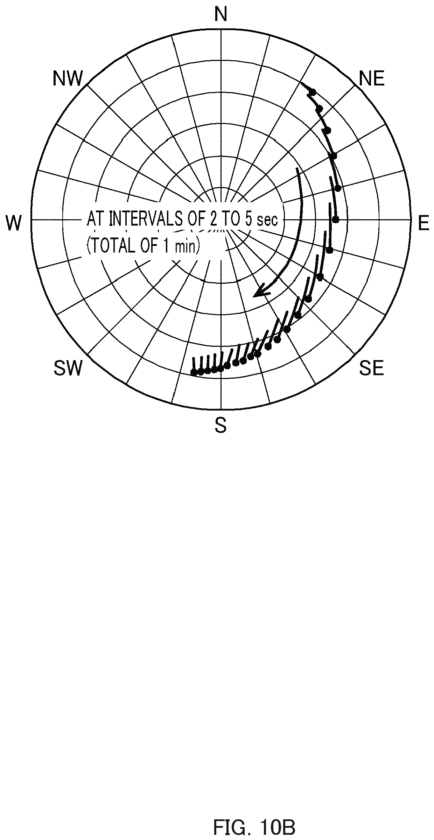

As with Fig. 10A, Fig. 10B is a celestial map illustrating a pattern drawn by the artificial shooting stars seen from the ground when the plural objects 102 are sequentially ejected from the spacecraft 101 (ejected at intervals of 2 to 5 seconds). In the present example, the speeds of the objects 102 sequentially ejected are varied within a range of 200 to 300 m/s. In the case of the present example, the number of the artificial shooting stars visible from one site increases to about 20 as compared with the number thereof in Fig. 10A. In this way, the speeds of the objects 102 sequentially ejected are individually controlled for each object 102, thereby being able to generate the artificial shooting stars in various aspects.

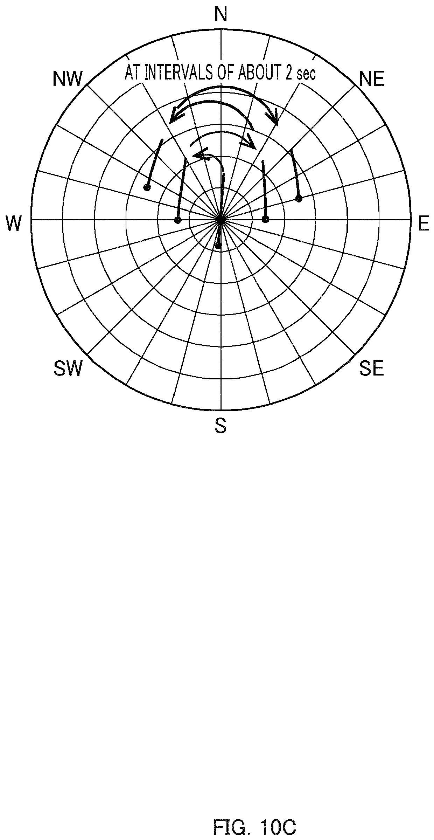

Fig. 10C is a celestial map illustrating a pattern drawn by artificial shooting stars seen from the ground when the plural objects 102 are sequentially ejected from the spacecraft 101. In the present example, the ejecting direction of the objects 102 sequentially ejected (ejected at intervals of 2 seconds) is voluntarily varied. In this way, the directions of the objects 102 sequentially ejected are individually controlled for each object 102, thereby being able to generate the artificial shooting stars in various aspects.

As described above, by sequentially ejecting the plural objects 102 from the spacecraft 101 and varying the speeds and directions of the ejected objects 102, it is possible to generate the artificial shooting stars in various aspects. This makes it possible to meet various needs and increase the variety of services.

### <Ejection of Entrusted Item>

Such a service may be provided that the object 102 including an item entrusted by the service beneficiary (an item requested or provided by the beneficiary or the like, which is hereinafter referred to as the "entrusted item") is ejected from the spacecraft 101. Examples of entrusted items conceivable include a material used for an atmospheric entry experiment, an article of a deceased person, remains, and the like. In that case, for example, the entrusted item is contained in a container made of a material that emits light upon entering the atmosphere and then is ejected, instead of being ejected as the object 102 as it is, thereby being able to reliably emit light and generate the artificial shooting star.

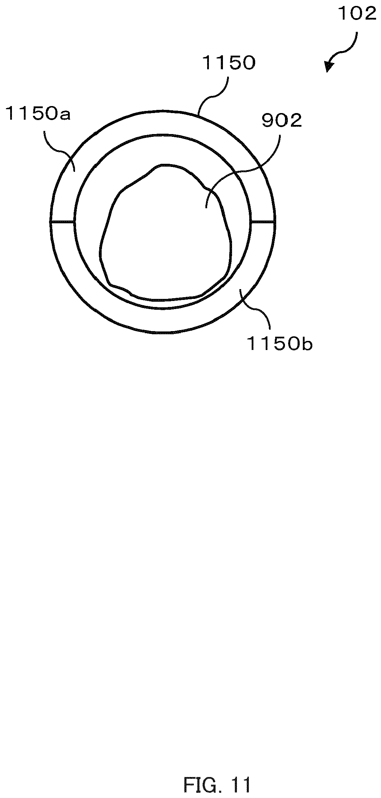

Fig. 11 illustrates an example of the foregoing container 1150. As illustrated in Fig. 11, the illustrated container 1150 is hollow and has a spherical external shape. For example, the entrusted item 902 is stored inside the container 1150 in a state where the container 115 is split into two hemispheres 1150a and 1150b, the two hemispheres 1150a and 1150b are joined, and the container 115 containing the entrusted item 902 is mounted on the spacecraft 101.

As described above in detail, according to the spacecraft 101 of an embodiment of the present disclosure, it is possible to safely generate the shooting stars in various aspects in a planned position on a planned date. It is also possible to generate the artificial shooting stars in various places over the world. In addition, by increasing the number of the artificial shooting stars that emit light in a single event, varying the positions, time intervals at which the plural artificial shooting stars emit light, and/or the like, it is possible to generate the artificial shooting stars in various aspects. Furthermore, by using an entrusted item from a service beneficiary as the object 102 that is the base of the shooting star, it is possible to provide high value-added services.

Embodiments of the present disclosure described above are simply to facilitate understanding of the present disclosure and are not in any way to be construed as limiting the present disclosure. The present disclosure may variously be changed or altered without departing from its gist and encompass equivalents thereof.

## Claims

1. A spacecraft comprising:
an ejector that ejects at least one object at a speed of 120 m/s or more, the at least one object being a base of a shooting star;
a direction controller that controls a direction in which the object is ejected; and
a position controller that controls a position at which the object is ejected.

2. The spacecraft according to claim 1, wherein
the at least one object comprises a plurality of objects,
the ejector sequentially ejects the plurality of objects at a time interval, the time interval being predetermined.

3. The spacecraft according to claim 2, wherein
the ejector individually controls the time interval for each of the objects.

4. The spacecraft according to claim 2, wherein
the ejector individually controls speeds at which the objects are ejected, for each of the objects.

5. The spacecraft according to claim 2, wherein
the ejector individually controls directions in which the objects are ejected, for each of the objects.

6. The spacecraft according to claim 1, further comprising:
an autonomous controller that autonomously controls the ejector, the direction controller, and the position controller, to eject the object in a predetermined ejecting direction, at a predetermined ejecting position, and at a predetermined ejecting speed.

7. The spacecraft according to claim 6, wherein
the autonomous controller includes a plurality of arithmetic units,
the direction controller includes a plurality of direction measuring instruments,
measurement data of the direction measuring instruments are inputted to the plurality of arithmetic units, the direction measuring instruments being different from each other,
each of the plurality of arithmetic units determines whether the inputted measurement data coincides with a predetermined value, and
the autonomous controller determines that the ejecting direction of the object has been set when all of the plurality of arithmetic units determine that the input measurement data coincide with the predetermined value.

8. The spacecraft according to claim 7, wherein
each of the direction measuring instruments is at least any one of a fixed star sensor, a Sun sensor, a geomagnetic field sensor, and an Earth sensor.

9. The spacecraft according to claim 6, wherein
the autonomous controller includes a plurality of arithmetic units,
the position controller includes a plurality of position measuring instruments,
measurement data of the position measuring instruments are inputted to the plurality of arithmetic units, the position measuring instruments being different from each other,
each of the plurality of arithmetic units determines whether the inputted measurement data of the position measuring instruments coincide with a predetermined value, and
the autonomous controller determines that a current position of the spacecraft coincides with the predetermined ejecting position when all of the plurality of arithmetic units determine that the inputted measurement data coincide with the predetermined value.

10. The spacecraft according to claim 9, wherein
each of the position measuring instruments is a timer or a GPS receiver.

11. The spacecraft according to claim 6, wherein
the autonomous controller includes a plurality of arithmetic units,
the ejector includes a plurality of trigger mechanisms that control ejection of the object,
the plurality of triggers are respectively controlled by the arithmetic units that are different from each other, and
the autonomous controller ejects the object when all of the plurality of trigger mechanisms are ready for ejecting the object.

12. The spacecraft according to any one of claims 1 to 11, wherein
the ejector ejects the object at a speed of 150 m/s or more.

13. The spacecraft according to any one of claims 1 to 11, further comprising:
a propulsion device that controls a trajectory of the spacecraft.

14. The spacecraft according to any one of claims 1 to 11, wherein
the object includes a container that contains an item.

15. The artificial shooting star generation method according to any one of claims 1 to 11, wherein
an information processor determines presence or absence of a collision between the object and another spacecraft based on information on a trajectory of the object after ejection obtained by simulation and a trajectory of the other spacecraft existing in outer space.

16. A service provision method using the spacecraft according to any one of claims 1 to 11, comprising:
generating an artificial shooting star using the spacecraft to provide a service beneficiary with an experience of the artificial shooting star.

17. The service provision method according to claim 16, wherein
an information processor communicatively coupled to a communication device of the beneficiary transmits, to the communication device, information on a position at which the artificial shooting star is to be generated, before the service is provided.

18. The service provision method according to claim 16, wherein
the object includes a container capable of containing an item, and
the container stores an item entrusted by the beneficiary.
